# EUROPEAN PATENT SPECIFICATION

(11) **EP 2 487 844 B1**
(45) Date of publication and mention of the grant of the patent: **06.08.2014**
(21) Application number: 11305107.2
(22) Date of filing: 02.02.2011
(51) Int. Cl.: H04L 12/717, H04L 12/721

(54) **Control unit and method for dynamically controlling the routing within a network**
Steuereinheit und Verfahren zur dynamischen Steuerung eines Routings in einem Netzwerk
Unité de contrôle et procédé pour le contrôle dynamique de l'acheminement dans un réseau

(43) Date of publication of application: 15.08.2012
(73) Proprietor: Alcatel Lucent, 75007 Paris (FR)
(72) Inventor: Rössler, Horst, 70794 Filderstadt (DE); Grob-Lipski, Heidrun, 72181 Starzach (DE); Schefczik, Peter, 91056 Erlangen (DE); Derakhshan, Fariborz, 90491 Nürnberg (DE)
(74) Representative: ALU Antw Patent Attorneys

(56) References cited:
- EP-A1- 2 066 086
- KLAUS HOFFMANN: "Interaction of OpenFlow with PCE", IP.COM JOURNAL, IP.COM INC., WEST HENRIETTA, NY, US, vol. 1, 17 November 2009 (2009-11-17), XP013135389, ISSN: 1533-0001
- SAURAV DAS ET AL: "Unifying Packet and Circuit Switched Networks", GLOBECOM WORKSHOPS, 2009 IEEE, IEEE, PISCATAWAY, NJ, USA, 30 November 2009 (2009-11-30), pages 1-6, XP031585796, ISBN: 978-1-4244-5626-0
- SEOK HONG MIN ET AL: "Implementation of a Programmable ServiceComposition Network using NetFPGA-basedOpenFlow Switches", , 14 June 2010 (2010-06-14), XP002635219, Retrieved from the Internet: URL:http://fif.kr/AsiaNetFPGAws/paper/1-1. pdf [retrieved on 2011-05-04]

## Description

### Field of the invention

The present invention relates to the field of controlling the routing within a network, and in particular to a control unit and method for controlling the routing within a network.

### State of the art

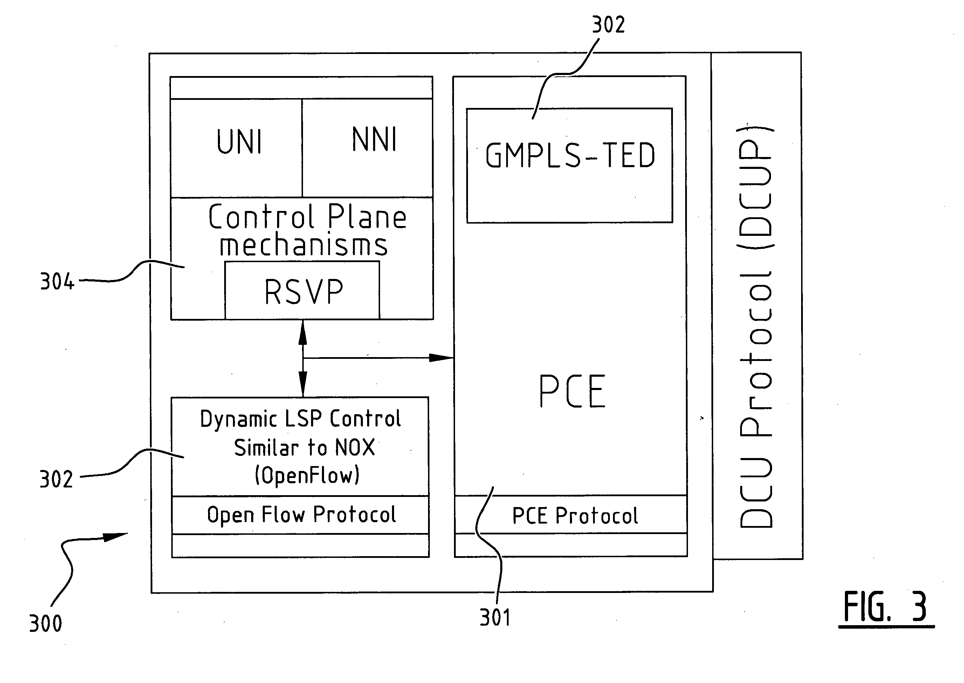

Klaus Hoffmann, "Interaction of OpenFlow with PCE", IP.COM Journal Vol. 1, 17 November 2009 discloses in figure 3 a hybrid OpenFlow/external PCE node architecture.

A network of the prior typically comprises diverse routers and switches with different capabilities and layers, such as Multi protocol label switching (MPLS) switches, flow based (OF) switches, etc. Such an MPLS switch comprises a path computation client to manage its own traffic engineering database and is connected to a path computation element (PCE) which is responsible for path finding and path optimization. An OF switch comprises an OpenFlow protocol client which manages a forwarding information base and is controlled by a remote OpenFlow controller which manages a plurality of OF switches. In other words, a typical Internet environment of the prior art comprises several incompatible solutions where connections are provided using network management tools, MPLS, GMPLS, OpenFlow, PCE/PCC and others. Many control functionalities are performed either in the network elements themselves or in a variety of incompatible systems, leading to an inefficient use of the network and a non-optimal routing.

### Summary

The object of embodiments of the invention is to provide a control unit and method which allows for a dynamically controlling of the routing within a network for a converged dynamic connectivity.

According to an embodiment of the invention there is provided a control unit for dynamically controlling the routing within a network comprising a plurality of network elements each having a forwarding information base. The control unit comprises a request processing entity adapted for receiving requests coming from said network elements and adapted for performing processing of said requests; a path computation entity adapted for computing a network path upon request from the request processing entity, based on a network graph and applying constraints; a flow control entity adapted for establishing a forwarding entry in the forwarding information base of a network element of the computed network path, upon request from the request processing entity. The path computation entity is further linked with a traffic engineering database which is updated with the computed network paths and other resource states.

In a possible embodiment a forwarding entry will be established in each network element of the computed network path. According to another variant a forwarding entry will only be established in a limited number of network elements, and e.g. only in the requesting network element of the computed network path. In that way there will be suboptimal paths established but with less signalling and processing load. Depending on e.g. the stability of the network and the sensibility of the network to changes, either one of those variants may be preferred.

Using such a control unit, the routing control functionalities in the network elements can be kept very simple and all network elements can address the same control unit for computing or setting of a path. This allows for reacting dynamically e.g. on congestion or failures and for finding the best path for a flow of given packets.

Note that the path computation entity can be located within the same network node as the flow control entity but could also be located in a remote node or on an out-of-network server.

According to a preferred embodiment the request processing entity is further adapted for communicating with the traffic engineering database for requesting and retrieving a path from said database. If the request processing entity and TED are located within the same network node, this can be done using e.g. SQL. If the TED and PCE are located in a different node the communication may pass through the PCE. The request processing entity is typically further adapted for communicating with the path computation entity and the flow control entity using internal control unit messages.

According to a preferred embodiment the request processing entity comprises a control plane mechanisms entity to translate an incoming request from a network element into an internal request message; and a dispatcher and coordinator entity to obtain a path from the traffic engineering database in accordance with the internal request message. The dispatcher and coordinator entity may then be further adapted to trigger a path computation by the path computation entity if the requested path is not available in the traffic engineering database.

According to a preferred embodiment the path computation entity is a PCE (Path Computation Element), preferably as defined in RFC4655, see http://tools.ietf.org/html//rfc4655. The request processing entity may then be adapted to communicate with PCE (Path Computation Element) through a PCE protocol, as defined in RFC5440, see http://tools.ietf.org/html//rfc5440. Also the PCE is linked with a central traffic engineering database storing current resource and traffic information which is updated centrally, and there is no need for having a local TED in the network elements. The operation of the TED is explained in more detail in RFC4655, see http://tools.ietf.org/html//rfc4655, and in the IETF internet draft entitled "Traffic Engineering Database Management Information Base in support of GMPLS", see http://tools.ietf.org/html/draft-ietf-ccamp-gmpls-ted-mib-01.

According to a preferred embodiment the request processing entity comprises a RSVP (Resource Reservation Protocol) instance. The RSVP protocol is defined in RFC2205, see https://datatracker.ietf.org/doc/rfc2205.

According to a preferred embodiment the TED comprises a Generalized Multi-Protocol Label Switching (GMPLS) instance. In that way cross-technology routers do not need to have the GMPLS functionality inside their router.

According to a preferred embodiment the request processing entity is further adapted for receiving and interpreting PCE protocol messages and/or OpenFlow protocol messages from network elements. In that way backward compatibility with the existing network elements having a PCE client or an OF client is guaranteed.

The invention further relates to a subunit for use in an embodiment of a control unit as disclosed above, comprising a request processing entity adapted for receiving requests coming from the network elements and adapted for performing processing of said requests; and a flow control entity adapted for establishing a forwarding entry in the forwarding information base of a network element of the network path computed by the path computation entity, upon request from the request processing entity. Such a sub-unit will typically be used when the path computation entity is located in a different node.

The invention also related to a method for dynamically controlling the routing within a network comprising a plurality of network elements. The method comprises receiving and interpreting a path request message from a network element at a request processing entity; sending by the request processing entity of a path computation request message to a path computation entity; computing a network path at said path computation entity, based on a network graph and applying constraints, said computed network path comprising a number of said plurality of network elements; updating a traffic engineering database with the computed network paths; and sending of a request by the request processing entity to a flow control entity to establish a forwarding entry in the forwarding information base of a network element of the computed network path.

In a typical embodiment of the method, after the receiving and interpreting of the path request message, the request processing entity verifies if the requested path is available in the traffic engineering database. If the requested path is not available in the traffic engineering database, the sending of a path computation request message and the computing of a network path are performed, whereupon the calculated path is retrieved from the information in the traffic engineering database by the request processing entity. If the requested path is available, the requested path is retrieved from the traffic engineering database by the request processing entity.

Further the invention relates to a computer program for performing any one or more of the steps of the method as disclosed above.

### Brief description of the figures

The accompanying drawings are used to illustrate presently preferred non-limiting exemplary embodiments of the present invention. The above and other advantages, features and objects of the invention will become more apparent, and the invention will be better understood from the following detailed description when read in conjunction with the accompanying drawings, in which:
Figure 1 is a schematic view of an Internet environment according to the state of the art;
Figure 2 is a schematic diagram of a dynamic control unit according to an embodiment of the invention;
Figure 3 is a schematic diagram of an exemplary embodiment of the dynamic control unit illustrated in figure 2;
Figure 4 is a schematic view of an Internet environment implementing an embodiment of the present invention; and
Figure 5 is a message sequence chart illustrating an embodiment of the method of the invention.
Figure 6 depicts a more detailed explanation on the operation of the DCU.

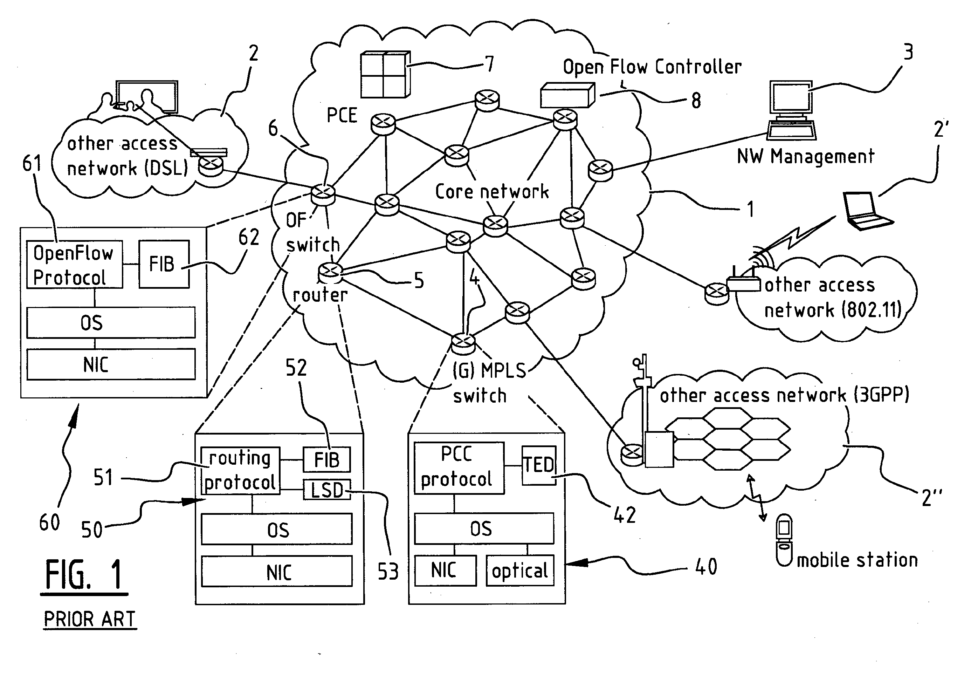

Figure 1 illustrates a core network 1 communicating with a plurality of access networks 2, 2', 2" and a network management server 3. Examples of access networks are a DSL access network 2, a 3GPP access network 2", etc. The core network 1 typically comprises diverse routers and switches with different capabilities and layers. In the present example the core network comprises MPLS switches 4, routers 5, and OF capable switches 6. Multi protocol label switching (MPLS) is a mechanism which operates at a layer that is generally considered to lie between layer 2 and layer 3, and is often referred to as "layer 2,5". Diagram 40 illustrates a typical MPLS switch. Such a switch comprises a path computation client to manage a traffic engineering database 42. Certain switches 4 may also be GMPLS switches managing cross-technology resources. GMPLS corresponds with layer 1-3. An example of a router 5 is schematically illustrated in diagram 50. The router comprises a routing protocol client such as an OSPF (OpenShortestPathFirst) client which manages a forwarding information base (FIB) 52 and a link state database (LSD) 53. The OSPF routing protocol typically controls layers 2-4. Nodes 4 and 5 are connected to a path computation element (PCE) 7 which is responsible for path finding and path optimization. In the case of MPLS or GMPLS the PCE 7 provides the route for each label switched path that is set up. OF switch 6 is shown schematically in diagram 60 and comprises an OpenFlow protocol client 61 which manages a forwarding information base 62. OF switches 6 are controlled by a remote OpenFlow controller 8 which manages a plurality of OF switches. In practice, an OpenFlow client is often added to an existing Ethernet switch, an IPv4 router or a wireless access point. In other words, a typical Internet environment of the prior art comprises several incompatible solutions where connections are provided using network management tools, MPLS, GMPLS, OpenFlow, PCE/PCC and the others. In conclusion, in the prior art systems many control functionalities are performed either in the network elements themselves or in a variety of incompatible systems, leading to an inefficient use of the network and a non-optimal routing.

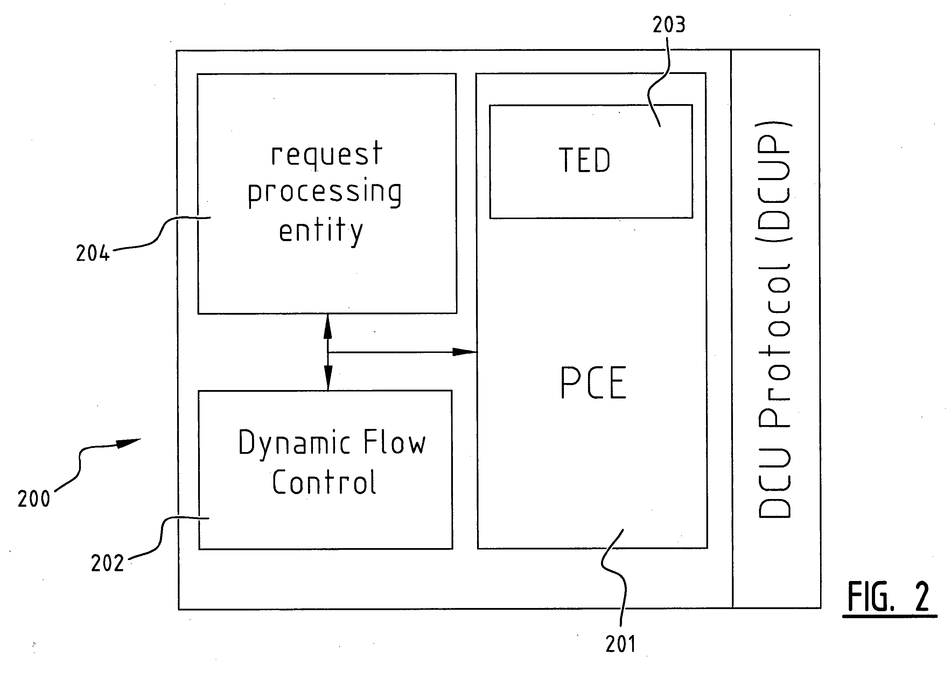

Now an embodiment of a dynamic control unit of the invention will be described referring to figure 2. Such a dynamic control unit (DCU) 200 is meant to be placed as a central element in a network domain of the core network. The term "central" and "unit" do not imply that all elements of the dynamic control unit need to be located at the same location, but only means that the dynamic control unit appears as a central unit to the network elements of the network domain. The dynamic control unit 200 is adapted to contain both PCE functionalities and dynamic flow control (DFC) functionalities. The dynamic control unit 200 comprises a PCE module 201 and a DFC module 202. The PCE module is linked with a traffic engineering database (TED) 203 which contains the topology and resource information of the domain. A request processing entity 204 is adapted to receive and interpret all requests arriving at the DCU and to dispatch those requests, e.g. to the PCE module 201 or the DFC module 202. In case of an explicit request to setup a path, e.g. requested by a network management system, the request may be directly forwarded to the DFC module 202.

In case of a request for a constrained-based path calculation, the request is transmitted to the PCE module 201. According to a preferred embodiment, the communication between the request processing entity 204 and the PCE module 201 is performed according to the PCE protocol language. This has the advantage that the communication with a remote PCE is also possible. The conversion of a request arriving at the central control unit into PCE protocol language is done from the interpreter in the request processing entity 204.

Such a dynamic control unit 200 enables a dynamic routing in an easy configuration. The DCU 200 performs separation of the data plane and the control plane by typically comprising substantially all of the control plane mechanisms in one single entity.

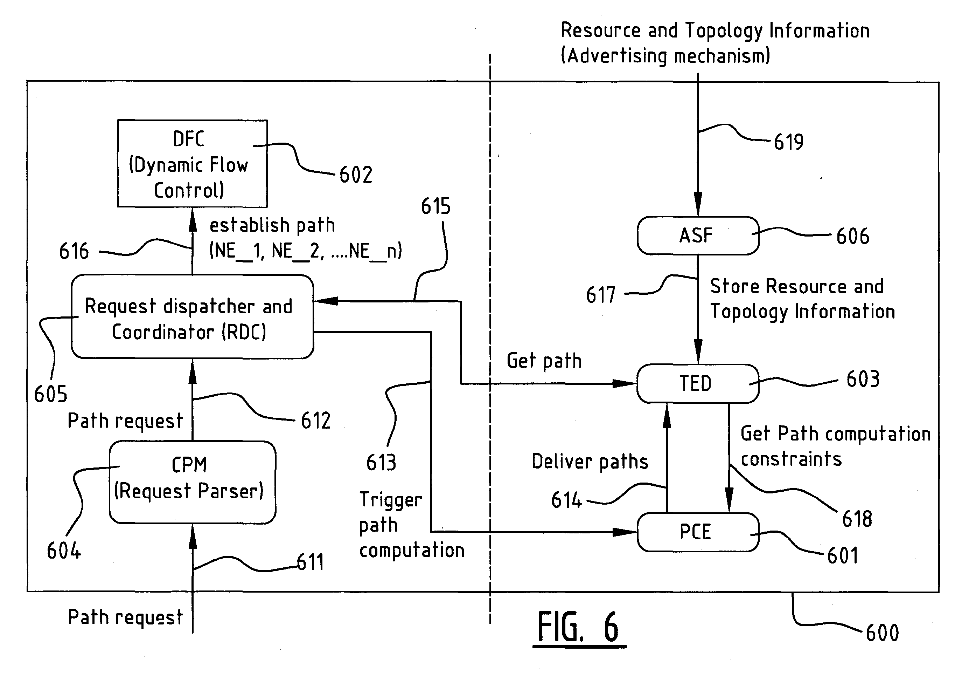

A more detailed explanation on the operation of the DCU is given below with reference to figure 6. In the DCU 600 there is provided a request processing entity comprising a control plane mechanisms (CPM) entity 604 and a request dispatcher and coordinator (RCD) entity 605. When a path request 611 is received at the DCU 600, the CPM entity 604 forwards the request to the RDC entity 605 which is arranged for processing the incoming requests. In case of an explicit request to set up a path, the request is sent to the DFC 602, see arrow 616. If it is a path retrieval request, the RDC entity will first check if the requested path is available in the TED 603, see arrow 615, and retrieve the path if available, whereupon the path is sent to the DFC, see arrow 616. If the requested path is not available in the TED 603, a path computation is triggered, see arrow 613. Upon receiving a trigger for a path computation the PCE 601 calculates a path using path computation constraints, see arrow 618, received from the TED 603, and delivers the calculated path to the TED 603, see arrow 614. The RCD entity 605 may be adapted to wait for a predetermined period of time larger then the time need for the calculation and delivering before retrieving the calculated path from the TED 603. According to a non illustrated variant the PCE 601 might be adapted to also deliver the calculated path to the RDC entity 605, i.e. arrow 613 would then have to point in both directions.

Generally a PCE is adapted to perform multivariable optimization with gradually increasing complexity, and to generate a pre-defined number of quasi-optimum paths based on default path requirements. The latter task is performed in a default state of the PCE, and the PCE moves to a transient state when receiving an explicit path request for calculating the requested path. After calculation the PCE 601 delivers the path to the TED, see arrow 614. The RDC 605 is further arranged for retrieving a calculated, pre-defined or pre-calculated path from the TED 603, see arrow 615, and for delivering this path to the DFC 602.

The TED 603 reflects the complete resource and topology information and also contains the calculated paths of the PCE 601. The consistency of the TED 603 is ensured from advertisements of topology and resource information (e.g. capacity, packet losses, load state etc), see arrow 619. The resource and topology information is advertised from the network entities to the DCU 600. In the DCU the ASF (Advertisement Supporting Functionality) 606 interprets the incoming advertising messages from the NEs and derives the resource and topology information for storage in the TED. The resource and topology information can be advertised periodically by the network elements or can be triggered from resource and topology changes. An example of how this can be done is disclosed in the European patent application with number EP 09 306 093.7, which is incorporated herein by reference in the name of the Applicant.

Figure 3 shows an exemplary embodiment of the DCU of figure 2. In this embodiment, the request processing entity is a CPM entity 304 with additional processing capabilities compared to the CPM entity 604 of figure 6. One of the control plane mechanisms of the CPM entity 304 is a resource reservation protocol (RSVP) client. The TED 303 is implemented as a GMPLS TED, and the dynamic flow control module 302 is implemented as a dynamic LSP control module using an OpenFlow Controller, e.g. similar to NOX. Cross-technology routers get their GMPLS tag entries also from the central DCU, since the GMPLS functionality is integrated within the DCU 300 in the example of figure 3.

The central DCU 200, 300, 600 is typically implemented to calculate the current best path under a load, resiliency, energy and policy rulings and not just the shortest path. Hence, no OSPF protocol and no information on network topology is needed inside the network elements. As a consequence, embodiments of the invention allow for reacting dynamically, e.g. on congestion or failures reproduce the best path for flow of given packets.

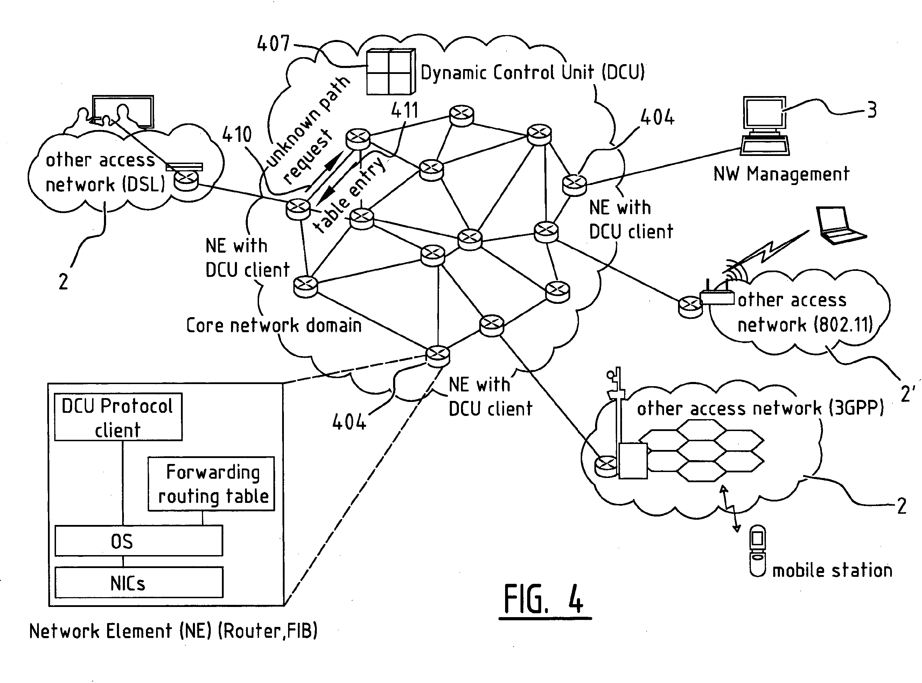

Figure 4 illustrates an Internet environment in which an embodiment of the DCU of the present invention is used. The core network 1 comprises a number of DCU clients 404 in the network elements which address their routing requests directly to the DCU 407. The DCU clients 404 are adapted to communicate with the network elements in order to collect topological information and to react properly in case of failure. Further, the DCU clients are adapted to communicate with the DCU using the DCU protocol which may e.g. be an enhanced PCE protocol (PCEP) instance or an enhanced OpenFlow instance. Also, the DCU client provides access to the forwarding and routing tables.

The DCU 407 is adapted to announce, compute and optionally allocate network resources via the DCU client 404. The DFC module in the DCU 407 may insert, modify or delete entries of the forwarding routing tables of the network elements 404 via the DCU clients.

Path computation requests 410 can be initiated by any network element 404, a network management system 3 or another DCU e.g. in a different network domain. The path computation request to the DCU will typically include the following:
- source and destination of the path (e.g. addresses, labels or names);
- bandwidth and other Quality of Service (QoS) parameters;
- resources, shared risk link groups (SRLGs) to use/avoid;
- the number of disjoint paths required and whether near-disjoint paths are acceptable;
- the levels of resiliency, reliability, and robustness of the path resources;
- policy-related information.

The path to be established can also be an LSP and in this case the forwarding table is filled with labels for the label swapping and not with IP addresses. Moreover the path destination can be a name. In the latter case the DCU covers the Content Centric Networking paradigm developed by Van Jacobson at Parc Research. Content-centric networking enables to use names for routing data requests and thus the forwarding table in the network element is updated with names accordingly.

The TED database includes current topology and resource information and policies and is updated by any request which is received by the DCU to keep the TED consistent with the status of the network domain. Topology updates, resource information and measurements for all kind of resources are received from the network elements 404 via their respective DCU clients and the update of the TED is performed accordingly.

When receiving a request 410 for an unknown path, the request is interpreted by the request processing entity of the DCU 407 and sent to the PCE for calculation. The computed path is then transferred to the dynamic flow controller which realizes the path by setting or modifying the appropriate table entries in the network elements. In case of an inter domain path the associated other DCUs are also updated via DCU to DCU communication, e.g. by sending an ACK (after successful path establishment) or NACK (after unsuccessful path establishment) in order to give only absolutely necessary information to the neighbour domain.

Through the use of a DCU according to an embodiment of the invention, the network elements can solely contain control plane supporting functions, e.g. neighbour discovery, measurements etc.

There may be provided different DCU's in the same domain or in different domains. Sets or hierarchies of DCU's can communicate through a DCU protocol. The multi domain interworking between DCU's may be enabled by hierarchical stacking of DCU's. An edge router interfacing with another domain may also be controlled by the DCU and is preferably provided with a DCU protocol client, see also figure 4.

For resolving unknown path requests (e.g. LSP setup), the unknown path requests are redirected to the DCU using the DCU clients (e.g. PCC). In case of known path requests, i.e. if a path to a destination is already known inside a switch, incoming packets are handled directly in the switch. Local topology information resides in the network element and is collected by the DCU. Thereby the conceived architecture can support stateless handling as well as state full handling.

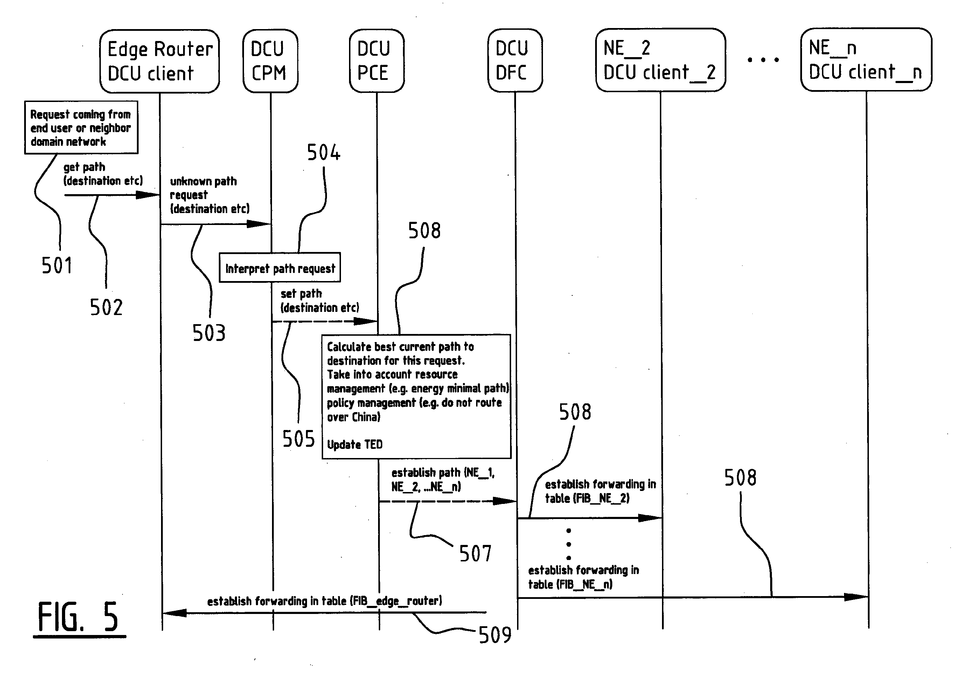

Now the setting up of a new path will be illustrated with reference to figure 5. A request 501 to get an unknown path to a destination is received at the DCU client of an edge router. The DCU client sends an unknown path request to the DCU, see step 503, where the request is interpreted by the request processing entity (comprising e.g. a CPM entity and RCD entity as disclosed in figure 6), see step 504. The request processing entity sends a further request to calculate a path to the PCE which calculates the best current path for the destination taking into account resource and policy management, see step 506. When the path (NE_1...NE_n) is calculated, the TED is updated and a message to establish the path is sent to the DFC module of the DCU, see step 507. Note that according to a variant the request processing entity could obtain the calculated path from the TED, whereupon the request processing entity could send a message to establish the path to the DFC module. The DFC then establishes a forwarding entry in the forwarding information base of each network element of the computed network path, see steps 508, and establishes a forwarding entry in the forwarding information base of the edge router. Of course, if a request for a known path were to arrive at the edge router, the DCU client in the edge router will forward the packets directly to the correct port. Note that ACK message have not been included in the chart of figure 5, but messages between the DCU and the DCU client could use ACK messages.

The techniques behind the sequence chart of figure 5 e.g. can be:
- RSVP and RSVP-TE which is a mechanism for setting up an end to end path on Layer 4 and is well defined in RFC 2205, and RFC 3209;
- technique treating name based routing entries (Layer 7) as elements in the FIB, known to the skilled person as the "van Jacobson" technique;
- MPLS and MPLS LSPs on Layer 2.5;
- Ethernet switching on Layer 2;
- IP Routing on Layer 3.

The difference to RSVP-TE and to OpenFlow as used in the prior art is that now for the first time all these techniques are supported under one single umbrella consisting of the centralized DCU and the DCU client.

While the principles of the invention have been set out above in connection with specific embodiments, it is to be clearly understood that this description is merely made by way of example and not as a limitation of the scope of protection which is determined by the appended claims.

## Claims

1. Control unit for dynamically controlling the routing within a network comprising a plurality of network elements, comprising:
- a request processing entity (204; 304; 604 and 605) adapted for receiving requests coming from said network elements; adapted for performing processing of said requests and adapted for communicating with the traffic engineering database for requesting and retrieving a path from said database;
- a path computation entity (201; 301; 601) adapted for computing a network path upon request from the request processing entity, based on a network graph and applying constraints, said computed network path comprising a number of said plurality of network elements; said path computation entity being linked with a traffic engineering database which is updated with the computed network paths;
- a flow control entity (202; 302; 602) adapted for establishing a forwarding entry in the forwarding information base of a network element of the computed network path, upon request from the request processing entity;
wherein the request processing entity is further adapted:
- to receive a path request to set up a path, and to directly forward said path request to set up a path to the flow control unit requesting the flow control unit to establish a forwarding entry in the forwarding information base of a network element of the path; and
- to receive a path retrieval request, to verify if the path requested in the path retrieval request is available in the traffic engineering database, and
- to send a path computation request message to the path computation entity, if the requested path is not available in the traffic engineering base; or
- to retrieve the path requested in the path retrieval request, if the requested path is available.

2. Control unit of claim 1, wherein the request processing entity is further adapted for communicating with the path computation entity and the flow control entity using internal control unit messages; or
wherein the path computation entity is a PCE, and wherein the request processing entity is further adapted for communicating with path computation entity using a PCE protocol.

3. Control unit of any of the previous claims, wherein the request processing entity comprises a control plane mechanisms entity (604) adapted to translate an incoming request from a network element into an internal request message; and a dispatcher and coordinator entity (605) adapted to obtain a path from the traffic engineering database in accordance with the internal request message (615).

4. Control unit of claim 3, wherein the dispatcher and coordinator entity (605) is further adapted to trigger a path computation by the path computation entity if the requested path is not available in the traffic engineering database (613).

5. Control unit of any of the previous claims, wherein the path computation entity is a PCE (Path Computation Element).

6. Control unit of any of the previous claims, wherein the request processing entity comprises a RSVP (Resource Reservation Protocol) instance.

7. Control unit of any of the previous claims, wherein the traffic engineering database comprises a Generalized Multi-Protocol Label Switching (GMPLS) instance.

8. Control unit of any of the previous claims, wherein the request processing entity is further adapted for receiving and interpreting any one or more of the following messages: an OpenFlow protocol message, a PCE protocol message.

9. Subunit for use in a control unit of any of the previous claims, comprising:
- a request processing entity adapted for receiving requests coming from the network elements; adapted for performing processing of said requests and adapted for communicating with the traffic engineering database for requesting and retrieving a path from said database;
- a flow control entity adapted for establishing a forwarding entry in the forwarding information base of a network element of the network path computed by the path computation entity, upon request from the request processing entity; wherein the request processing entity comprises a control plane mechanisms entity (604) adapted to translate an incoming request from a network element into an internal request message; and a dispatcher and coordinator entity (605) adapted to obtain a path from the traffic engineering database in accordance with the internal request message (615) ;
wherein the dispatcher and coordinator entity (605) is further adapted to trigger a path computation by the path computation entity if the requested path is not available in the traffic engineering database (613); and
wherein the request processing entity is further adapted:
- to receive a path request to set up a path, and to directly forward said path request to set up a path to the flow control unit requesting the flow control unit to establish a forwarding entry in the forwarding information base of a network element of the path; and
- to receive a path retrieval request, to verify if the path requested in the path retrieval request is available in the traffic engineering database, and
- to send a path computation request message to the path computation entity, if the requested path is not available in the traffic engineering base; or
- to retrieve the path requested in the path retrieval request, if the requested path is available.

10. Method for dynamically controlling the routing within a network comprising a plurality of network elements, comprising:
- receiving and interpreting a path request message from a network element at a request processing entity (503, 504);
- sending by the request processing entity of a path computation request message to a path computation entity (505) ;
- computing a network path at said path computation entity, based on a network graph and applying constraints, said computed network path comprising a number of said plurality of network elements (508);
- updating a traffic engineering database with the computed network paths (508);
- sending of a request by the request processing entity to a flow control entity to establish a forwarding entry in the forwarding information base of a network element of the computed network path (507); wherein after the receiving and interpreting of the path request message, the request processing entity verifies if the requested path is available in the traffic engineering database; and wherein,
- if the requested path is not available in the traffic engineering database, the sending of a path computation request message (613) and the computing of a network path are performed; whereupon the calculated path is retrieved from the traffic engineering database by the request processing entity; and
- if the requested path is available, the requested path is retrieved from the traffic engineering database by the request processing entity (615); and wherein if a request is received at the request processing entity to setup a path, the setup path request is directly forwarded to the flow control unit requesting the flow control entity to establish a forwarding entry in the forwarding information base of each network element of the path.

11. Computer program for performing any one or more of the steps of the method of claim 10.

## Patentansprüche

1. Steuereinheit zur dynamischen Steuerung des Routings innerhalb eines Netzwerks mit einer Vielzahl von Netzwerkelementen, umfassend:
- Eine Anforderungsverarbeitungsentität (204; 304; 604 und 605), ausgelegt für den Empfang von von den besagten Netzwerkelementen eingehenden Anforderungen; ausgelegt für das Durchführen der Verarbeitung der besagten Anforderungen, und ausgelegt für die Kommunikation mit der verkehrstechnischen Datenbank, um einen Pfad von der besagten Datenbank anzufordern und abzurufen;
- eine Pfadberechnungsentität (201; 301; 601), ausgelegt für die Berechnung eines Netzwerkpfades auf Anforderung von einer Anforderungsverarbeitungsentität auf der Basis eines Netzwerkgraphen und von Anwendungsbeschränkungen, wobei der besagte berechnete Netzwerkpfad eine Anzahl der besagten Vielzahl von Netzwerkelementen umfasst; wobei die besagte Pfadberechnungsentität mit einer verkehrstechnischen Datenbank, welche mit den berechneten Netzwerkpfaden aktualisiert wird, verknüpft ist;
- eine Datenflusssteuereinheit (202; 302; 602), ausgelegt für das Erstellen eines Weiterleitungseintrags in der Weiterleitungsinformations-Datenbank eines Netzwerkelements des berechneten Netzwerkpfades auf Anforderung von der Anforderungsverarbeitungsentität;
wobei die Anforderungsverarbeitungsentität weiterhin ausgelegt ist für
- den Empfang einer Pfadanforderung für den Aufbau eines Pfades, und für das direkte Weiterleiten der besagten Pfadanforderung für den Aufbau eines Pfades an die Datenflusssteuereinheit, um die Datenflusssteuereinheit aufzufordern, einen Weiterleitungseintrag in der Weiterleitungsinformations-Datenbank eines Netzwerkelements des Pfades zu erstellen; und
- den Empfang einer Pfadabrufanforderung, um zu überprüfen, ob der in der Pfadabrufanforderung angeforderte Pfad in der verkehrstechnischen Datenbank verfügbar ist, und
- das Senden einer Pfadberechnungsanforderungsnachricht an die Pfadberechnungsentität, wenn der angeforderte Pfad in der verkehrstechnischen Datenbank nicht verfügbar ist; oder
- das Abrufen des in der Pfadabrufanforderung angeforderten Pfades, wenn der angeforderte Pfad verfügbar ist.

2. Steuereinheit nach Anspruch 1, wobei die Anforderungsverarbeitungsentität weiterhin für die Kommunikation mit der Pfadberechnungsentität und der Datenflusssteuerungsentität unter Verwendung von von der Steuerungsentität ausgegebenen Nachrichten ausgelegt ist; oder
wobei die Pfadberechnungsentität ein PCE ist, und wobei die Anforderungsverarbeitungsentität weiterhin für die Kommunikation mit der Pfadberechnungsentität unter Verwendung eines PCE-Protokolls ausgelegt ist.

3. Steuereinheit nach einem beliebigen der vorstehenden Ansprüche, wobei die Anforderungsverarbeitungsentität eine Steuerebenenmechanismen-Entität (604), welche dazu ausgelegt ist, eine von einem Netzwerkelement eingehende Anforderung in eine interne Anforderungsnachricht zu übersetzen, sowie eine Zuweisungs- und Koordinationsentität (605), welche dazu ausgelegt ist, einen Pfad von der verkehrstechnischen Datenbank in Übereinstimmung mit der internen Anforderungsnachricht (615) zu erhalten, umfasst.

4. Steuereinheit nach Anspruch 3, wobei die Zuweisungs- und Koordinationsentität (605) weiterhin dazu ausgelegt ist, eine Pfadberechnung durch die Pfadberechnungsentität auszulösen, wenn der angeforderte Pfad in der verkehrstechnischen Datenbank (613) nicht verfügbar ist.

5. Steuereinheit nach einem beliebigen der vorstehenden Ansprüche, wobei die Pfadberechnungsentität ein PCE (Pfadberechnungselement) ist.

6. Steuereinheit nach einem beliebigen der vorstehenden Ansprüche, wobei die Anforderungsverarbeitungsentität eine Reservierungsprotokoll- bzw. RSVP-Instanz ist.

7. Steuereinheit nach einem beliebigen der vorstehenden Ansprüche, wobei die verkehrstechnische Datenbank eine weiterentwickelte Multiprotokoll-Labelvermittlungs- bzw. GMPLS-Instanz umfasst.

8. Steuereinheit nach einem beliebigen der vorstehenden Ansprüche, wobei die Anforderungsverarbeitungsentität weiterhin für den Empfang und die Auswertung einer beliebigen der folgenden Nachrichten ausgelegt ist: OpenFlow-Protokoll-Nachricht, PCE-Protokoll-Nachricht.

9. Teileinheit zur Verwendung in einer Steuereinheit gemäß einem beliebigen der vorstehenden Ansprüche, umfassend:
- Eine Anforderungsverarbeitungsentität, ausgelegt für den Empfang von von den besagten Netzwerkelementen eingehenden Anforderungen; ausgelegt für das Durchführen der Verarbeitung der besagten Anforderungen, und ausgelegt für die Kommunikation mit der verkehrstechnischen Datenbank, um einen Pfad von der besagten Datenbank anzufordern und abzurufen;
- eine Datenflusssteuerungsentität, ausgelegt für das Erstellen eines Weiterleitungseintrags in der Weiterleitungsinformations-Datenbank eines Netzwerkelements des von der Pfadberechnungsentität berechneten Netzwerkpfades auf Anforderung von der Anforderungsverarbeitungsentität; wobei die Anforderungsverarbeitungsentität eine Steuerebenenmechanismen-Entität (604), welche dazu ausgelegt ist, eine von einem Netzwerkelement eingehende Anforderung in eine interne Anforderungsnachricht zu übersetzen, sowie eine Zuweisungs- und Koordinationsentität (605), welche dazu ausgelegt ist, einen Pfad von der verkehrstechnischen Datenbank in Übereinstimmung mit der internen Anforderungsnachricht (615) zu erhalten, umfasst;
wobei die Zuweisungs- und Koordinationsentität (605) weiterhin dazu ausgelegt ist, eine Pfadberechnung durch die Pfadberechnungsentität auszulösen, wenn der angeforderte Pfad in der verkehrstechnischen Datenbank (613) nicht verfügbar ist; und
wobei die Anforderungsverarbeitungsentität weiterhin ausgelegt ist für
- den Empfang einer Pfadanforderung für den Aufbau eines Pfades, und für das direkte Weiterleiten der besagten Pfadanforderung für den Aufbau eines Pfades an die Datenflusssteuerungseinheit, um die Datenflusssteuerungseinheit aufzufordern, einen Weiterleitungseintrag in der Weiterleitungsinformations-Datenbank eines Netzwerkelements des Pfades zu erstellen; und
- den Empfang einer Pfadabrufanforderung, um zu überprüfen, ob der in der Pfadabrufanforderung angeforderte Pfad in der verkehrstechnischen Datenbank verfügbar ist, und
- das Senden einer Pfadberechnungsanforderungsnachricht an die Pfadberechnungsentität, wenn der angeforderte Pfad in der verkehrstechnischen Datenbank nicht verfügbar ist; oder
- das Abrufen des in der Pfadabrufanforderung angeforderten Pfades, wenn der angeforderte Pfad verfügbar ist.

10. Verfahren zur dynamischen Steuerung des Routings innerhalb eines Netzwerks mit einer Vielzahl von Netzwerkelementen, umfassend:
- Empfangen und Auswerten einer Pfadanforderungsnachricht von einem Netzwerkelement an einer Anforderungsverarbeitungsentität (503, 504);
- Senden, durch die Anforderungsverarbeitungsentität, einer Pfadberechnungsanforderungsnachricht an eine Pfadberechnungsentität (505);
- Berechnen eines Netzwerkpfades an der besagten Pfadberechnungsentität auf der Basis eines Netzwerkgraphen und von Anwendungsbeschränkungen, wobei der besagte berechnete Netzwerkpfad eine Anzahl der besagten Vielzahl von Netzwerkelementen (508) umfasst;
- Aktualisieren einer verkehrstechnischen Datenbank mit den berechneten Netzwerkpfaden (508);
- Senden, durch die Anforderungsverarbeitungsentität, einer Anforderung für das Erstellen eines Weiterleitungseintrags in der Weiterleitungsinformations-Datenbank eines Netzwerkelements des berechneten Netzwerkpfades (507) an eine Datenflusssteuerungsentität; wobei die Anforderungsverarbeitungsentität nach dem Empfang und der Auswertung der Pfadanforderungsnachricht überprüft, ob der angeforderte Pfad in der verkehrstechnischen Datenbank verfügbar ist; und wobei,
- wenn der angeforderte Pfad in der verkehrstechnischen Datenbank nicht verfügbar ist, das Senden einer Pfadberechnungsanforderungsnachricht (613) und das Berechnen eines Netzwerkpfades durchgeführt werden; woraufhin der berechnete Pfad durch die Anforderungsverarbeitungsentität aus der verkehrstechnischen Datenbank abgerufen wird; und
- wenn der angeforderte Pfad verfügbar ist, der angeforderte Pfad durch die Anforderungsverarbeitungsentität (615) aus der verkehrstechnischen Datenbank abgerufen wird; und wobei, wenn eine Anforderung für den Aufbau eines Pfades an der Anforderungsverarbeitungsentität empfangen wird, die Pfadaufbauanforderung direkt an die Datenflusssteuerungseinheit weitergeleitet wird, um die Datenflusssteuerungseinheit aufzufordern, eine Weiterleitungseintrag in der Weiterleitungsinformations-Datenbank eines jeden Netzwerkelements des Pfades zu erstellen.

11. Computerprogramm für das Durchführen eines beliebigen oder mehrerer der Schritte des Verfahrens gemäß Anspruch 10.

## Revendications

1. Unité de contrôle dynamique du routage à l'intérieur d'un réseau comprenant une pluralité d'éléments de réseau, comprenant :
- une entité de traitement de demandes (204 ; 304 ; 604 et 605) adaptée pour recevoir des demandes provenant desdits éléments de réseau ; adaptée pour effectuer un traitement desdites demandes et adaptée pour communiquer avec la base de données d'ingénierie de trafic pour demander et récupérer un chemin à partir de ladite base de données ;
- une entité de calcul de chemin (201 ; 301 ; 601) adaptée pour calculer un chemin de réseau lors de la demande par l'entité de traitement de demandes, en fonction d'un graphique de réseau et de contraintes d'application, ledit chemin de réseau calculé comprenant plusieurs parmi ladite pluralité d'éléments de réseau ; ladite entité de calcul de chemin étant liée à une base de données d'ingénierie de trafic qui est mise à jour avec les chemins de réseau calculés ;
- une entité de contrôle de flux (202 ; 302 ; 602) adaptée pour établir une entrée de transfert dans la base d'informations de transfert d'un élément de réseau du chemin de réseau calculé, lors de la demande par l'entité de traitement de demandes ;
dans laquelle l'entité de traitement de demandes est en outre adaptée :
- pour recevoir une demande de chemin pour établir un chemin, et pour transférer directement ladite demande de chemin pour établir un chemin vers l'unité de contrôle de flux demandant à l'unité de contrôle de flux d'établir une entrée de transfert dans la base d'informations de transfert d'un élément de réseau du chemin ; et
- pour recevoir une demande de récupération de chemin, pour vérifier si le chemin demandé dans la demande de récupération de chemin est disponible dans la base de données d'ingénierie de trafic, et
- pour envoyer un message de demande de calcul de chemin à l'entité de calcul de chemin, si le chemin demandé n'est pas disponible dans la base d'ingénierie de trafic ; ou
- pour récupérer le chemin demandé dans la demande de récupération de chemin, si le chemin demandé est disponible.

2. Unité de contrôle selon la revendication 1, dans laquelle l'entité de traitement de demandes est en outre adaptée pour communiquer avec l'entité de calcul de chemin et l'entité de contrôle de flux au moyen des messages d'unité de contrôle internes ; ou
dans laquelle l'entité de calcul de chemin est un PCE, et dans laquelle l'entité de traitement de demandes est en outre adaptée pour communiquer avec l'entité de calcul de chemin au moyen d'un protocole PCE.

3. Unité de contrôle selon l'une quelconque des revendications précédentes, dans laquelle l'entité de traitement de demandes comprend une entité de mécanismes du plan de commande (604) adaptée pour convertir une demande entrante provenant d'un élément de réseau en un message de demande interne ; et une entité de répartition et de coordination (605) adaptée pour obtenir un chemin à partir de la base de données d'ingénierie de trafic conformément au message de demande interne (615).

4. Unité de contrôle selon la revendication 3, dans laquelle l'entité de répartition et de coordination (605) est en outre adaptée pour déclencher un calcul de chemin au moyen de l'entité de calcul de chemin si le chemin demandé n'est pas disponible dans la base de données d'ingénierie de trafic (613).

5. Unité de contrôle selon l'une quelconque des revendications précédentes, dans laquelle l'entité de calcul de chemin est un PCE (élément de calcul de chemin).

6. Unité de contrôle selon l'une quelconque des revendications précédentes, dans laquelle l'entité de traitement de demandes comprend une instance RSVP (Protocole de réservation de ressources).

7. Unité de contrôle selon l'une quelconque des revendications précédentes, dans laquelle la base de données d'ingénierie de trafic comprend une instance de commutation multiprotocole par étiquette généralisée (GMPLS).

8. Unité de contrôle selon l'une quelconque des revendications précédentes, dans laquelle l'entité de traitement de demandes est en outre adaptée pour recevoir et interpréter l'un quelconque ou les deux messages suivants : un message de protocole OpenFlow, un message de protocole PCE.

9. Sous-unité destinée à être utilisée dans une unité de contrôle selon l'une quelconque des revendications précédentes, comprenant :
- une entité de traitement de demandes adaptée pour recevoir des demandes provenant des éléments de réseau ; adaptée pour effectuer un traitement desdites demandes et adaptée pour communiquer avec la base de données d'ingénierie de trafic pour demander et récupérer un chemin à partir de ladite base de données ;
- une entité de contrôle de flux adaptée pour établir une entrée de transfert dans la base d'informations de transfert d'un élément de réseau du chemin de réseau calculé par l'entité de calcul de chemin, lors de la demande par l'entité de traitement de demandes ; dans laquelle l'entité de traitement de demandes comprend une entité de mécanismes du plan de commande (604) adaptée pour convertir une demande entrante provenant d'un élément de réseau en un message de demande interne ; et une entité de répartition et de coordination (605) adaptée pour obtenir un chemin à partir de la base de données d'ingénierie de trafic conformément au message de demande interne (615) ;
dans laquelle l'entité de répartition et de coordination (605) est en outre adaptée pour déclencher un calcul de chemin au moyen de l'entité de calcul de chemin si le chemin demandé n'est pas disponible dans la base de données d'ingénierie de trafic (613) ; et
dans laquelle l'entité de traitement de demandes est en outre adaptée :
- pour recevoir une demande de chemin pour établir un chemin, et pour transférer directement ladite demande de chemin pour établir un chemin vers l'unité de contrôle de flux demandant à l'unité de contrôle de flux d'établir une entrée de transfert dans la base d'informations de transfert d'un élément de réseau du chemin ; et
- pour recevoir une demande de récupération de chemin, pour vérifier si le chemin demandé dans la demande de récupération de chemin est disponible dans la base de données d'ingénierie de trafic, et
- pour envoyer un message de demande de calcul de chemin à l'entité de calcul de chemin, si le chemin demandé n'est pas disponible dans la base d'ingénierie de trafic ; ou
- pour récupérer le chemin demandé dans la demande de récupération de chemin, si le chemin demandé est disponible.

10. Procédé de contrôle dynamique du routage à l'intérieur d'un réseau comprenant une pluralité d'éléments de réseau, comprenant les étapes suivantes :
- recevoir et interpréter un message de demande de chemin provenant d'un élément de réseau au niveau d'une entité de traitement de demandes (503, 504) ;
- envoyer au moyen de l'entité de traitement de demandes un message de demande de calcul de chemin à une entité de calcul de chemin (505) ;
- calculer un chemin de réseau au niveau de ladite entité de calcul de chemin, en fonction d'un graphique de réseau et de contraintes d'application, ledit chemin de réseau calculé comprenant plusieurs parmi ladite pluralité d'éléments de réseau (508) ;
- mettre à jour une base de données d'ingénierie de trafic avec les chemins de réseau calculés (508) ;
- envoyer une demande au moyen de l'entité de traitement de demandes à une entité de contrôle de flux pour établir une entrée de transfert dans la base d'informations de transfert d'un élément de réseau du chemin de réseau calculé (507) ; dans lequel après la réception et l'interprétation du message de demande de chemin, l'entité de traitement de demandes vérifie si le chemin demandé est disponible dans la base de données d'ingénierie de trafic ; et dans lequel,
- si le chemin demandé n'est pas disponible dans la base de données d'ingénierie de trafic, l'envoi d'un message de demande de calcul de chemin (613) et le calcul d'un chemin de réseau sont effectués ; le chemin calculé étant récupéré à partir de la base de données d'ingénierie de trafic par l'entité de traitement de demandes ; et
- si le chemin demandé est disponible, le chemin demandé est récupéré à partir de la base de données d'ingénierie de trafic par l'entité de traitement de demandes (615) ; et dans lequel si une demande est reçue au niveau de l'entité de traitement de demandes pour établir un chemin, la demande de chemin d'établissement est directement transférée vers l'unité de contrôle de flux demandant à l'entité de contrôle de flux d'établir une entrée de transfert dans la base d'informations de transfert de chaque élément de réseau du chemin.

11. Programme informatique pour exécuter l'une quelconque ou plusieurs des étapes du procédé selon la revendication 10.
